Europäisches Patentamt

European Patent Office

Office européen des brevets

(19)

(11) Publication number: **0 572 743 A1**

(12) **EUROPEAN PATENT APPLICATION**

(21) Application number: **92401576.1**

(22) Date of filing: **05.06.92**

(51) Int. Cl.5: **A01N 25/18,** A01N 27/00, A01N 35/02, A01N 37/02, A01N 43/90

(43) Date of publication of application:
**08.12.93 Bulletin 93/49**

(84) Designated Contracting States:
**AT BE CH DE DK ES FR GB GR IT LI LU MC NL PT SE**

(71) Applicant: **NCSR "DEMOKRITOS"**
**P.O. Box 60228**
**GR-153 10 Aghia Paraskevi, Attiki(GR)**

(72) Inventor: **Mazomenos, Basilios**
**28 Kritis**
**GR-152 31 Halandri(GR)**
Inventor: **Hadjoudis, Eugenios**
**15 Alexandrou Soutsou**
**GR-106 71 Athens(GR)**
Inventor: **Yannacopoulou, Constantina**
**25 Zoodochov**
**GR-151 27 Pigis Melissa(GR)**
Inventor: **Botsi, Antigoni**
**58 Formionos St.**
**GR-116 33 Athens(GR)**
Inventor: **Tsoucaris, George**
**13 rue André Theuriet**
**F-92340 Bourg la Reine(FR)**

(74) Representative: **Grosset-Fournier, Chantal Catherine**
**Grosset-Fournier & Demachy s.a.r.l.**
**103 rue La Fayette**
**F-75010 Paris (FR)**

(54) **New inclusion complexes of cyclodextrin and their use in slow release formulation for the treatment of the olive pest Dacus oleae (GMEL).**

(57) The invention relates to a composition containing :
- an inclusion complex of 1,7-dioxaspiro[5,5]undecane and of a cyclodextrin and
- at least one of the following complexes:
  * an inclusion complex of (-)-α-pinene and of cyclodextrin,
  * an inclusion complex of n-nonyl aldehyde and of cyclodextrin,
  * an inclusion complex of ethyl dodecanoate and of cyclodextrin.

EP 0 572 743 A1

EP 0 572 743 A1

The invention relates to new inclusion complexes of cyclodextrin, to a process for their preparation and to their use, particularly in slow release formulation for the treatment of the olive pest *Dacus oleae.*

The olive is a tree of very special social and economical significance for the Mediterranean countries of the European Economic Community, where it occupies about 65% of the total world surface devoted to this crop and produces approximately 80% of the world production of olive oil and almost 50% of the world production of pickled olives.

Thus any development which could reduce agricultural input costs, while increasing production and quality of fruits and hence oil would be of great economic significance both within the community and in respect to its external trade.

This particularly applies for high quality olive oil (pesticide free olive oil).

Control of the olive fruit fly depends almost entirely on the use of organophosphorus and carbamate pesticides. Their wide-spread use has already produced some serious problems in water contamination and food supplies in several locations of the olive growing countries. One of the most serious effects of using exclusively chemical insecticides for the control of the olive fly has been the development of pest resistance to the pesticides, the consequence of which has been the use of higher dosages which increases the environmental pollution and also affects severely the natural enemy complex with subsequent appearance of secondary pests.

The olive fruit fly pheromone is known to be composed of 4 components (Mazomenos and Haniotakis, Journal of Chemical Ecology, Vol 11, No 3, 1985, "Male olive fruit fly attraction to synthetic pheromone components in laboratory and field tests") which are :

- 1,7-dioxaspiro[5,5]undecane
- (-)-$\alpha$-pinene
- n-nonyl aldehyde
- ethyl dodecanoate

Two techniques are mostly used to control the olive pest: the attracticide technique and the mating disruption technique.

The attracticide technique, also known as "attrack and kill" utilizes the pheromone at the normal rate in conjunction with a small amount of pesticide. The insects are attracted to the target traps, where they absorb a lethal dose. The small amount of pesticide associated with the pheromone sources increases control by killing male insects attracted to the traps.

Trap installation is time and labour consuming. The pheromone formulation used contains only the major pheromone component of the olive fruit fly. So far, not efficient formulation for the secondary components have been achieved. However experimental results indicate that, for optimum male attraction, the complete pheromone blend is required.

Several attempts to develop the mating disruption technique for the major olive pest, the olive fly *Dacus oleae* during the past in small field areas proved to be ineffective. The main reasons are the lack of an effective formulation, the incomplete pheromone used (only the major pheromone component was used for the species), and the inadequate isolation of the treated areas to prevent already mated females moving from non treated areas.

Cyclodextrins are intermediate size compounds (MW 1000-1300), which are produced from enzymatic degradation of starch. They are composed of six, seven or eight -1,4 linked glycopyranose residues and are called, $\alpha$-cyclodextrins, $\beta$-cyclodextrins, or $\gamma$-cyclodextrins ($\alpha$-CD, $\beta$-CD, $\gamma$-CD) respectively. They have the shape of a truncated cone with a hydrophobic cavity at its center and its narrow and wide rims are occupied by primary and secondary hydroxyl groups, which makes its periphery hydrophilic. CDs act as hosts for a great variety of chemicals (guests) to form inclusion complexes. The guest molecules are entrapped within the cavity at least partly.

The following definitions are provided for some basic terms that are used throughout this specification.

**Cyclodextrin Derivative** - refers to a cyclodextrin-containing coumpound in which one or more atoms or groups of atoms are substituted at a C2, C3 or C6 hydroxyl or hydroxyl hydrogen, i.e., "modified cyclodextrins". The term cyclodextrin derivative also encompasses "linked cyclodextrins" where two or more cyclodextrins are linked together, and compounds where a useful agent such as a pharmaceutical is covalently bonded to a cyclodextrin, such that the covalent bond, when broken will yield the agent in active form. This term also includes any salt or hydrate which can be formed from the cyclodextrin derivative.

**Modified Cyclodextrin** - refers to a species of cyclodextrin derivatives that contains one or more atoms or groups of atoms substituted on a C2, C3 or C6 hydroxyl or hydroxyl hydrogen. The term modified cyclodextrin will not be meant to include compounds where two or more cyclodextrins are linked together, or compounds where a useful agent such as a pharmaceutical is covalently bound to a cyclodextrin. This term also includes any salt or hydrate which can be formed from the modified cyclodextrin.

2

**Linked Cyclodextrins** - refers to two or more cyclodextrins covalently linked together by one or more bridging groups. The bridging groups can link a C2, C3 or C6 position of one cyclodextrin to any one of the C2, C3, or C6 positions of the other cyclodextrin. This term includes any salt or hydrate which can be formed from the linked cyclodextrins.

**Inclusion complex of cyclodextrin** refers to an inclusion complex in which there are one or more associable groups or portions of a group of a cyclodextrin, or a cyclodextrin derivative which form an association with one or more associable groups or portions of a guest atom or molecule. The associable portions can include hydrophobic, Van der Waals, polar or charged groups or portions, or groups or portions capable of hydrogen bonding. This term also includes any salt or hydrate which can be formed from the inclusion-association complex.

One of the objects of the present invention is to provide with inclusion complexes of cyclodextrin and the pheromone components of the olive fruit fly pheromone.

Another object of the invention is to provide with appropriate rate formulations of the olive fruit fly pheromone component.

Another object of the invention is to provide with efficient formulations of olive fruit fly pheromones, which give optimum male attraction.

Another aspect of the invention is to provide with a new formulation of the complete olive fruit fly pheromone blend, enabling its release in the correct ratio and constant rate, thus highly improving its effectiveness.

Another object of the invention is to provide with a controlled release system that can be applied in powder form or liquid, and which has the advantage of resorting to mechanical means for the application.

Another aspect of the invention is to provide with natural biodegradable products, which act as slow release carriers and are not detrimental to the environment.

All these aims are achieved through a composition containing:
- an inclusion complex of 1,7-dioxaspiro[5,5]undecane and of a cyclodextrin and,
- at least one of the following complexes:
  * an inclusion complex of (-)-$\alpha$-pinene and of cyclodextrin,
  * an inclusion complex of n-nonyl aldehyde and of cyclodextrin,
  * an inclusion complex of ethyl dodecanoate and of cyclodextrin.

1,7-dioxaspiro[5,5]undecane will also be designated by spiroketal.

According to an advantageous embodiment of the invention, the compositions contain:
- an inclusion complex of 1,7-dioxaspiro[5,5]undecane and cyclodextrin and,
- an inclusion complex of (-)-$\alpha$-pinene and cyclodextrin.

According to another advantageous embodiment of the invention, the compositions contain :
- an inclusion complex of 1,7-dioxaspiro[5,5]undecane and of cyclodextrin,
- an inclusion complex of (-)-$\alpha$-pinene and cyclodextrin and,
- an inclusion complex of n-nonyl aldehyde and cyclodextrin.

According to another advantageous embodiment of the invention, the compositions contain :
- an inclusion complex of 1,7-dioxaspiro[5,5]undecane and of cyclodextrin,
- an inclusion complex of (-)-$\alpha$-pinene and cyclodextrin,
- an inclusion complex of n-nonyl aldehyde and cyclodextrin and,
- an inclusion complex of ethyl dodecanoate and cyclodextrin.

In the compositions of the invention, the cyclodextrin is chosen from among:
$\beta$-cyclodextrin, $\alpha$-cyclodextrin, $\gamma$-cyclodextrin methylated cyclodextrin such as 2,6 di-O-methyl-$\beta$-cyclodextrin, 2,3,6-tri-O-methyl-$\beta$-cyclodextrin.

The cyclodextrin used in the compositions of the invention can be such that it is different for each inclusion complex.

According to another advantageous embodiment of the invention, the same cyclodextrin is used for each of the inclusion complexes.

Complexes of $\alpha$, $\beta$, and $\gamma$-cyclodextrins and the methylated cyclodextrins in various positions with the four olive fly pheromone components (1,7-dioxaspiro[5,5] undecane, (-)-$\alpha$-pinene, nonyl aldehyde, ethyl dodecanoate) have been prepared. The formation of the inclusion complexes were determined by X-ray diffraction, differential scanning calorimetry and IR methods.

Advantageously, the compositions of the invention are such that :
- the amount of 1,7-dioxaspiro[5,5]undecane is from 5 to 30 percent of weight of the inclusion complex between the cyclodextrin and said compound, preferably from 5 to 20,
- the amount of (-)-$\alpha$-pinene is from 4 to 25 percent of weight of the inclusion complex between the cyclodextrin and said compound, preferably from 4 to 15,

EP 0 572 743 A1

- the amount of n-nonyl aldehyde is from 4 to 25 percent of weight of the inclusion complex between the cyclodextrin and said compound, preferably from 4 to 15,
- the amount of ethyl dodecanoate is from 7 to 38 percent of weight of the inclusion complex between the cyclodextrin and said compound, preferably from 5 to 20.

In the compositions of the invention the molar ratio between:
- 1,7-dioxaspiro[5,5]undecane and (-)-α-pinene is from 0 to 20, preferably from 12 to 4,
- 1,7-dioxaspiro[5,5]undecane and n-nonyl aldehyde is from 0 to 10, preferably from 10 to 1,
- 1,7-dioxaspiro[5,5]undecane and ethyl dodecanoate is from 0 to 20, preferably from 12 to 4,
and provided that one at least of the ratio above-mentioned is different from 0.

According to another advantageous embodiment of the invention, the compositions contain :
- an inclusion complex of 1,7-dioxaspiro[5,5]undecane and β-cyclodextrin and,
- an inclusion complex of (-)-α-pinene and β-cyclodextrin.

According to another embodiment of the invention, the compositions contain :
- an inclusion complex of 1,7-dioxaspiro[5,5]undecane and β-cyclodextrin and,
- an inclusion complex of (-)-α-pinene and β-cyclodextrin and,
- an inclusion complex of n-nonyl aldehyde and β-cyclodextrin.

According to another embodiment of the invention, the compositions contain :
- an inclusion complex of 1,7-dioxaspiro[5,5]undecane and β-cyclodextrin and,
- an inclusion complex of (-)-α-pinene and β-cyclodextrin and,
- an inclusion complex of n-nonyl aldehyde and β-cyclodextrin and,
- an inclusion of ethyl dodecanoate and β-cyclodextrin.

According to another embodiment of the invention, the compositions contain :
- an inclusion complex of 1,7-dioxaspiro[5,5]undecane and trimethyl-β-cyclodextrin and,
- an inclusion complex of (-)-α-pinene and trimethyl-β-cyclodextrin.

According to another embodiment of the invention, the compositions of contain :
- an inclusion complex of 1,7-dioxaspiro[5,5]undecane and trimethyl-β-cyclodextrin and,
- an inclusion complex of (-)-α-pinene and trimethyl-β-cyclodextrin and,
- an inclusion complex of n-nonyl aldehyde and trimethyl-cyclodextrin.

According to another embodiment of the invention, the compositons of contain :
- an inclusion complex of 1,7-dioxaspiro[5,5]undecane and trimethyl-β-cyclodextrin and,
- an inclusion complex of (-)-α-pinene and trimethyl-β-cyclodextrin and,
- an inclusion complex of n-nonyl aldehyde and trimethyl-β-cyclodextrin and,
- an inclusion of ethyl dodecanoate and trimethyl-β-cyclodextrin .

According to an advantageous embodiment of the invention, the compositions contain a liquid vehicle, preferably water, with the amount of inclusion complex per ml of water being such that the release rates are the following:
- the release rate of 1,7-dioxaspiro[5,5]undecane is of 30 $\mu$g/h at least, and not higher than 100 $\mu$g/h for 100 mg of complex, for a total release of 1,7-dioxaspiro[5,5]undecane of 25 mg,
- the release rate of (-)-α-pinene is 10 $\mu$g/h at least, and not higher than 33 $\mu$g/h for 100 mg of complex, for a total release of (-)-α-pinene of 8 mg,
- the release rate of n-nonyl aldehyde is 3 $\mu$g/h at least, and not higher than 10 $\mu$g/h for 100 mg of complex, for a total release of n-nonyl aldehyde of 2,5 mg,
- the release rate of ethyl dodecanoate is 10 $\mu$g/h at least, and not higher than 33 $\mu$g/h for 100 mg of complex for a total release of ethyl dodecanoate of 8 mg.

Examples of release rates of each compound are indicated on Table 1.

The release rate of the guest compound in the cyclodextrin have been monitored in the laboratory using analytical methods and under field conditions and the longevity and stability of the pheromone complexes have been established. The longevity and stability are determined according to NMR spectra in D2O or DH50-d6.

The pheromone components form very stable inclusion complexes with the cyclodextrins. The release rates in powder form are low, i.e. for β-cyclodextrin-spiroketal, in any of the compositions of the invention, the release rate of spiroketal is of 0,008 $\mu$g/mg/h per sample of 250 mg of complex. Satisfactory release rates are achieved when the complexes form an emulsion in water: the release rate can be of 0,361 $\mu$g/mg/h of spiroketal per sample of 250 mg of complex diluted in 5ml of water.

The release rate of the pheromone can be controlled by the amount of the water added. In pilot field tests, a high number (452; as an example) of males were captured in traps baited with sealed polyethylene bags containing the suspension of the compositions of the invention in water. The pheromone components diffuse to the environment much faster than water. It is known that polyethylene has the property not to

4

diffuse water. The number of males captured in the above mentioned traps was significantly higher (452; as an example) than the number of captures (249) in traps baited with the conventional pheromone formulation (such as polyethylene vials) used in traps for the olive fly monitoring (see the examples).

The invention also relates to a process for preparing a composition of the invention, said process comprising mixing the inclusion complexes.

Said inclusion complexes can be prepared by a method comprising:

the reaction of cyclodextrin with 1,7-dioxaspiro[5,5]undecane, and/ of with(-)-$\alpha$-pinene,and/or with n-nonyl aldehyde,and/ or with ethyl dodecanoate under the conditions given in the examples.

The invention also relates to a process to obtain the above-mentioned pheromones from the pheromone gland of virgin females, by removing the glands with forceps and extract in an appropriate solvent, such as ethyl ether for 20 min.

The invention also relates to a process for attracting male olive pests, particularly male olive fruit fly, *Dacus olea* Gmelin, wherein an appropriate amount of the composition of the invention, is used, preferably in an optimum amount of 25 mg to attract male flies.

The invention also relates to insecticidal composition comprising an insecticide in combination with a composition of the invention.

The amount of insecticide used is advantageously of 5 to 30 mg for 250 mg of composition of the invention used (or for 25 mg of 1,7-dioxaspiro[5,5]undecane inclusion complex).

The invention relates to a process for killing insects, particularly *Dacus oleae,* or interfering with their development, comprising the use of an insecticidal composition of the invention, in an effective amount.

The attracticide technique developed according to the invention in experimental use for *Dacus oleae* control, uses pheromones to lure the insects to trap where it contacts the pesticide ; the amount of the pesticide used is greatly reduced, (reduction between 75-90%) and it is also isolated from the environment.

As to the mating disruption technique which can be developped with the use of the CD-pheromone complexes as the disruptant for the olive fly and the other olive pest, it can eliminate completely the use of pesticides.

The mating disruption technique, which prevents insects from propagation, requires the permeation of the atmosphere with the sex pheromone. The sex pheromone has to be distributed in a large area in a formulation with a controlling release rate. With the sex pheromone everywhere, the sensory mechanism of the male will be saturated and therefore the male becomes confused in the treated area. Males cannot distinguish between the pheromone from the slow release formulation and that emitted from the females.

With the compositions of the invention, the disadvantages already mentioned can be overcome, since the complete pheromone blend is used and also large scale experiments can be designed. The cyclodexrin pheromone complexes can be developed in a flowable form in order to be applied by ground or air using mechanical methods.

Examples :

The $\beta$-cyclodextrin and the 2 of its derivatives : 2,6-dimethyl-$\beta$-cyclodextrin and 2,3,6-trimethyl-$\beta$-cyclodextrin were used to encapsulate the 4 pheromone components of *bactrocera oleae*: (Mazomenos, B.E. and Haniotakis, G.E. 1985. Male olive fly attraction to synthetic sex pheromone components in laboratory and field tests. J.Chem. Ecol. 3 397-405.).

Preparation of a complex of $\beta$-CD with 1,7-dioxaspirols[5,5]undecane, (-)-$\alpha$-pinene, nonanal, and ethyl dodecanoate.

$\beta$-Cyclodextrin (1 mmole) was suspended in water (30 ml) and heated in a water bath to 65°C with stirring. To the resulting solution the liquid guest molecule (3 mmole) was added in drops and a cloudy mixture appeared, which was stirred at that temperature for 1/2 h and then allowed to reach room temperature and stand overnight. The resulting precipitate was filtered under vacuum, dried over $P_2O_5$ under vacuum and left in a desicator for three days.

The scale used and yields were : $\beta$-CD/1,7-dioxaspiro[5,5]undecane, 3 mmole, 84% ; $\beta$-CD/(-)-$\alpha$-pinene, 1 mmole, 83% ; $\beta$-CD/nonanal, 0,4 mmole, 90% ; $\beta$-CD/ethyl dodecanoate, 1 mmole, 88%. Differential Scanning Calorimetry and X-ray powder diffraction diagramm and $^1$H-NMR spectra available. (see Table 3 hereafter).

TABLE 3

| CHEMICAL SHIFT VARIATIONS (Δδ) IN PPM OF THE CYCLODEXTRIN PROTONS INDUCED BY THE GUESTS AT 298°K | | | | | |
|---|---|---|---|---|---|
| Complex | H-1 | H-2 | H-3 | H-4 | H-5 |
| γCD/1 | 0.015 | 0.013 | 0.077 | 0.005 | 0.193 |
| βCD/1 | 0.001 | 0.003 | 0.021 | -0.002 | 0.028 |
| βCD/2 | 0.002 | - 0.001 | 0.011 | 0.001 | 0.018 |
| βCD/3 | -0.002 | 0.003 | 0.073 | -0.022 | 0.122 |
| TM-βCD/1 | 0.021 | 0.021 | 0.034 | 0.022 | - * |
| TM-βCD/2 | 0.065 | 0.070 | 0.136 | 0.076 | - * |
| TM-βCD/3 | 0.023 | 0.024 | 0.052 | 0.021 | - * |
| DM-βCD/1 | 0.016 | - * | 0.040 | - * | 0.056 |

* Obscured by other peaks

1 = spiroketal, 2 = (-)-α-pinene, 3 = nonanal.

The proton NMR spectra in $D_2O$ of the complexex provide information regarding inclusion, only if compared to the corresponding spectra of the 'free' cyclodextrins. Thus, true inclusion is evidenced by the significant chemical shift variations experienced by the inside protons (H-3 and H-5), which approach the guest molecule, whereas the outer ones (H-1, H-2 and H-4) are less or not at all affected by the inclusion process. In the following table 3, the chemical shift changes for each individual proton of the cyclodextrins is recorded. Note that in the liquid phase, ethyl dodecanoate does not seem to exist as complex neither with β-nor with TM-β-CD.

Preparation of a complex of 2,6-di-O methyl-β-CD with 1,7-dioxaspiro[5,5]undecane.

DM-β-CD (1,13 mmole, 1,502 g), was completely dissolved in water (7 ml) and heated to 65°C in a water bath whereupon it started to crystallize. Three equivalents of the spiroketal were added dropwise, and the mixture stirred at that temperature for 1/2 h. The suspension was allowed to achieve room temperature, and then to stand overnight. The resulting fine white powder was filtered and air dried, and then dried in a desicator over $P_2O_5$ for one day.

Yield 80%, differential scanning calorimetry and X-ray powder diffraction diagrams and $^1$H-NMR spectrum available. (see table 3)

Preparation of a complex of 2,3,6-tri-O-methyl-β-CD with 1,7-dioxaspiro[5,5]undecane, (-)-α-pinene, n-nonyl aldehyde, and ethyl dodecanoate.

TM-β-CD (1 mmole) was dissolved in water (7 ml) and heated to 65°C. To the suspension, the liquid guest was added (3 mmole) and the remaining was carried out as above. The complexes with (-)-α-pinene and ethyl dodecanoate were additionally dried for 3 h under vacuum. The scale used and the yields obtained in each case were: TM-β-CD/spiroketal, 3,48 mmole, 79% ; TM-β-CD/(-)-α-pinene, 0,6 mmole, 83% ; TM-β-CD/nonanal, 0,2 mmole, quantitative, sticky substance ; TM-β-CD/ethyl dodecanoate, 0,6 mmole, 91%. For each case, differential scanning calorimetry and X-ray powder diffraction diagrams and $^1$H-NMR spectra are available. (See table 3)

Preparation of a complex of γ-CD with 1,7-dioxaspiro[5,5]undecane

γ-Cyclodextrin (1,5 mmol), dissolved in 10 ml water, was heated to 65°C with stirring, and then 1,7-dioxaspirol[5,5]undecane (4,5 mmol) was added. Stirring continued for 3 h, with gradual decrease of temperature to ambient. The formed suspension was refridgerated for 1 day and then filtered under vacuum, and dried in a vacuum desicator over $P_2O_5$ for 2 days. Yield, 95% DSC and X-ray powder diagrams and NMR spectrum are available.

All components of the pheromone formed inclusion complexes with the cyclodextrins as it was determined by X-ray powder diffraction diagrams and differential scanning calorimetry and NMR spectroscopy.

The guests contents were determined by dissociation of the complexes. The radio host/guest is 1:1 except for the case of 2,3,6-trimethyl-β-cyclodextrin and ethyl dodecanoate and γ-cyclodextrin/spiroketal were the ratio is 1:2.

Study of the release rate

The release rate of the pheromone components from the inclusion complexes was monitored by a close looping air circulator. The solid complexes had negligible release rates (less than 0.008 μg/mg/h of spiroketal for a sample of 250 mg of complex). Therefore, a small quantity of water (5ml) was added to set an equilibrium between the uncomplexed and complexed form of the guests.

Release rate studies were performed in the laboratory using a close air circulator (TEKMAR) in which a certain amount of complex was placed for one hour at 18°C. Dry complexes did not release significant amounts of guest molecules. Significant release rates were achieved by addition of water to form a suspension of the complexes. Moreover, the amount of water added in conjunction with the inherent solubility of each complex, was found to influence directly the amount of the guest released in each case. The exact data are collected in Table 1.

Table 1 shows the release rates of three components of the olive fruit fly pheromone from the inclusion complexes.

Table 1

| Release rate ( μg/h ) of *Dacus oleae* pheromone components from 1 mg cyclodextrin complexes in 1 ml of water. | | | | | | |
|---|---|---|---|---|---|---|
| Hours | Spiroketal Complexes | | | (-)-α-pinene Complexes | | Ethyl-Laureate Complexes | |
| | B-CD[a] | DMB-CD[b] | TMB-CD[c] | B-CD | TMB-CD | B-CD | TMB-CD |
| 1 | 0.18 | 0.34 | 1.78 | 0.93 | 4.99 | 0.13 | 0.76 |
| 2 | 0.25 | 0.37 | 1.72 | 0.17 | 1.42 | 0.21 | 0.23 |
| 3 | 0.24 | 0.26 | 1.00 | 0.10 | 0.24 | 0.10 | 0.13 |
| 4 | 0.23 | 0.21 | 1.62 | 0.09 | 0.22 | 0.13 | 0.10 |

a = β-cyclodextrin,
b = heptakis 2,6-dimethyl-β-cyclodextrin,
c = Heptakis-trimethyl-β,-cyclodextrin.

These measurements show that complexes of 2,3,6-trimethyl-β-CDs have the highest release rates, a fact that was confirmed by preliminary field experiments.

Based on these results, setups for the attraction of male *Dacus* insects were devised in field tests, as follows.

A certain amount of each complex was weighed and placed in a 10 cm x 5 cm polythylene bag, to which an appropriate amount of water was added. The amounts of the complexes were calculated so as to correspond to 25 mg of 1,7-dioxaspiro [5,5]undecane (spiroketal, for short) or 25 mg total pheromone content in a 3:1:0.3:1 ratio (the naturally occuring ratio of constituents, Mazomenos & Haniotakis, J. Chem. Ecol. 1985, 11, 379) when spiroketal, pinene, nonanal and ethyl dodecanoate were used (see Table hereunder). The bags were sealed with heating.

Field tests. Eleven combinations of complexes were used, each in triplicate. The bags were clipped on white hard boards (15 cm x 20 cm) coated with sticky glue. The field was divided in three blocks, in each of which the eleven combinations were hung along with one polyethylene vial containing liquid spiroketal, and one blank board. Insect captures were recorded once a week. The experiment lasted for 5 weeks, from April to May.

In the following table, the exact amounts of complexes used, the volume of water added in each case, and the number of insects captured (total average) are shown.

Table 2

| Combination # | Complex (mg) | Water (ml) | Insects Captured |
|---|---|---|---|
| 1 | β-CD/spiroketal*(272) | 2,8 | 7 |
| 2 | β-CD/spiroketal (204)+<br>β-CD/(-)-α-pinene (83) | 2<br>0,8 | 10 |
| 3 | β-CD/spiroketal (190)+<br>β-CD/(-)-α-pinene (77)+<br>β-CD/nonanal** (35) | 1,9<br>0,8<br>0,4 | 5 |
| 6 | β-CD/spiroketal (154)+<br>β-CD/(-)-α-pinene (63)+<br>β-CD/nonanal (28)+<br>β-CD/Et dodecanoate (24) | 1,5<br>0,6<br>0,3<br>1,2 | 7 |
| 7 | PM-β-CD/spiroketal (312)+ | 1,5 | 7 |
| 8 | PM-β-CD/spiroketal (234)+<br>PM-β-CD/(-)-α-pinene (71)+ | 1,4<br>0,3 | 26 |
| 9 | PM-β-CD/spiroketal (218)+<br>PM-β-CD/(-)-α-pinene (66)+<br>PM-β-CD/nonanal (35)+ | 1,2<br>0,3<br>0,2 | 8 |
| 10 | PM-β-CD/spiroketal (177)+<br>PM-β-CD/(-)-α-pinene (54)+<br>PM-β-CD/nonanal (28)+<br>PM-β-CD/Et dodecanoate (15) | 0,9<br>0,3<br>0,2<br>0,6 | 23 |
| 11 | DM-β-CD/spiroketal (320) | 3,2 | 37 |
| 12 | Polyethylene vials/spiroketal | | 5 |
| 13 | Blank | | 0 |

\* spiroketal= 1,7-dioxaspiro[5,5]undecane

\*\* nonanal=n-nonyl aldehyde

**Claims**

1. Composition containing:

- an inclusion complex of 1,7-dioxaspiro[5,5]undecane and of a cyclodextrin and
- at least one of the following complexes:
  * an inclusion complex of (-)-α-pinene and of cyclodextrin,
  * an inclusion complex of n-nonyl aldehyde and of cyclodextrin,
  * an inclusion complex of ethyl dodecanoate and of cyclodextrin.

2. Composition according to claim 1, containing an inclusion complex of 1,7-dioxaspiro[5,5]undecane and cyclodextrin and an inclusion complex of (-)-α-pinene and cyclodextrin.

3. Composition according to claim 1, containing an inclusion complex of 1,7-dioxaspiro[5,5]undecane and of cyclodextrin and an inclusion complex of (-)-α-pinene and cyclodextrin and an inclusion complex of n-nonyl aldehyde and cyclodextrin.

4. Composition according to claim 1, containing an inclusion complex of 1,7-dioxaspiro[5,5]undecane and of cyclodextrin, an inclusion complex of (-)-α-pinene and cyclodextrin, an inclusion complex of n-nonyl aldehyde and cyclodextrin and an inclusion complex of ethyl dodecanoate and cyclodextrin.

5. Composition according to anyone of claims 1 to 4, wherein the cyclodextrin is chosen from among: β-cyclodextrin, α-cyclodextrin, γ-cyclodextrin methylated cyclodextrin such as di-O-methyl-β-cyclodextrin, tri-O-methyl-β-cyclodextrin.

6. Composition according to anyone of claims 1 to 5, wherein:
the amount of 1,7-dioxaspiro[5,5]undecane is from 5 to 30 percent of weight of the inclusion complex between the cyclodextrin and said compound, preferably from 5 to 20,
- the amount of (-)-α-pinene is from 4 to 25 percent of weight of the inclusion complex between the cyclodextrin and said compound, preferably from 4 to 15,
- the amount of n-nonyl aldehyde is from 4 to 25 percent of weight of the inclusion complex between the cyclodextrin and said compound, preferably from 4 to 15,
- the amount of ethyl dodecanoate is from 7 to 38 percent of weight of the inclusion complex between the cyclodextrin and said compound, preferably from 5 to 20.

7. Composition according to anyone of claims 1 to 6, wherein the molar ratio between:
- 1,7-dioxaspiro[5,5]undecane and (-)-α-pinene is from 0 to 20, preferably from 12 to 4,
- 1,7-dioxaspiro[5,5]undecane and n-nonyl aldehyde is from 0 to 10, preferably from 10 to 1,
- 1,7-dioxaspiro[5,5]undecane and ethyl dodecanoate is from 0 to 20, preferably from 12 to 4.

8. Composition according to anyone of claims 1 to 7, containing a liquid vehicle, preferably water, the amount of inclusion complex per ml of water being such that the release rates are the following:
- the release rate of 1,7-dioxaspiro[5,5]undecane is of 30 μg/h at least, and not higher than 100 μg/h for 100 mg of complex, for a total release of 1,7-dioxaspiro[5,5]undecane of 25 mg,
- the release rate of (-)-α-pinene is 10 μg/h at least, and not higher than 33 μg/h for 100 mg of complex, for a total release of (-)-α-pinene of 8 mg,
- the release rate of n-nonyl aldehyde is 3 μg/h at least, and not higher than 10 μg/h for 100 mg of complex, for a total release of n-nonyl aldehyde of 2,5 mg,
- the release rate of ethyl dodecanoate is 10 μg/h at least, and not higher than 33 μg/h for 100 mg of complex, for a total release of ethyl dodecanoate of 8 mg.

9. Process for preparing a composition according to anyone of claims 1 to 7, which process comprises mixing the inclusion complexes, said inclusion complexes being prepared by a method comprising:
the reaction of cyclodextrin with 1,7-dioxaspiro[5,5]undecane, and/ of with(-)-α-pinene, and/ or with n-nonyl aldehyde,and/ or with ethyl dodecanoate.

10. Process for attracting male olive pests, particularly male olive fruit fly, *Dacus olea* Gmelin, wherein an appropriate amount of the composition according to anyone of claims 1 to 8, is used, preferably in an amount of 25 mg.

11. Insecticidal composition comprising an insecticide in combination with a composition according to anyone of claims 1 to 8.

12. Process for killing insects, particularly *Dacus oleae,* or interfering with their development, comprising the use of an insecticidal composition according to claim 11, in an effective amount.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | MINUTES 5TH INT. SYMP. CYCLODEXTRINS 1991, PARIS, FR<br>page 578--583<br>KONDILIS P. ET AL 'inclusion complexes of cyclodextrins with the pheromone of the olive fruit fly dacus oleae'<br>*the whole document* | 1-12 | A01N25/18<br>A01N27/00<br>A01N35/02<br>A01N37/02<br>A01N43/90 |
| A | CHEMICAL ABSTRACTS, vol. 102, no. 23,<br>10 June 1985, Columbus, Ohio, US;<br>abstract no. 199532c,<br>* abstract * | | |
| D | & J. CHEM. ECOL.<br>vol. 11, no. 3, 1985,<br>page 397-405 | | |
| A | GB-A-2 063 068 (CELAMERCK) | | |
| A | J. SZEJTLI 'cyclodextrin technology'<br>1990 , KLUWER , DORDRECHT, NL<br>* page 335 - page 364 * | | TECHNICAL FIELDS SEARCHED (Int. Cl.5)<br><br>A01N |

The present search report has been drawn up for all claims

| Place of search | Date of completion of the search | Examiner |
|---|---|---|
| THE HAGUE | 10 FEBRUARY 1993 | DECORTE D.M. |